# FASCICULE DE BREVET EUROPEEN

(11) **EP 3 084 536 B1**
(45) Date de publication et mention de la délivrance du brevet: **18.03.2020**
(21) Numéro de dépôt: 14815313.3
(22) Date de dépôt: 15.12.2014
(51) Int. Cl.: G05B 19/4063

(54) **DISPOSITIF DE CONTRÔLE DU PERÇAGE OU DU FRAISURAGE D'UNE PIÈCE DE HAUTE-PRÉCISION**
VORRICHTUNG ZUR STEUERUNG DER BOHRUNG ODER EINSENKUNG EINES HOCHPRÄZISEN WERKSTÜCKS
DEVICE CONTROLLING DRILLING OR COUNTERSINKING OF A HIGH-PRECISION WORKPIECE

(30) Priorité: 17.12.2013 FR 1362819
(43) Date de publication de la demande: 26.10.2016
(73) Titulaire: AIRBUS (SAS), 31700 Blagnac (FR)
(72) Inventeur: LE MOAL, Guénolé, F-44000 Nantes (FR); RABATE, Patrice, F-44800 Saint Herblain (FR)
(74) Mandataire: Gicquel, Olivier Yves Gérard
(86) Numéro de dépôt international: PCT/EP2014/077743
(87) Numéro de publication internationale: WO 2015/091349

(56) Documents cités:
- EP-A- 0 321 108
- US-A- 4 744 242
- US-A1- 2012 294 688

## Description

### Domaine de l'invention

La présente invention se rapporte à un dispositif de contrôle du perçage ou du fraisurage d'une pièce de haute précision, c'est-à-dire dont la tolérance est inférieure à 50 µm.

L'invention concerne particulièrement les problèmes de précision liés aux caractéristiques géométriques d'un usinage résultant du perçage ou du fraisurage et en particulier la profondeur de fraisure ou l'épaisseur de matière percée.

L'invention concerne tous les domaines de haute précision, notamment l'aéronautique dans lequel les tolérances sont de l'ordre de 20, 30 ou 40 µm en fonction du type de pièce.

### Etat de la technique

Certaines opérations d'assemblage requièrent un haut niveau de précision des usinages réalisés : certaines de leurs caractéristiques géométriques, comme la profondeur de perçage ou la profondeur de fraisure, doivent être garanties. Etant donné les faibles tolérances autorisées par certaines applications, les précisions requises sont difficiles à atteindre de manière reproductible, et plus particulièrement en environnement de production industriel où de nombreux paramètres agissent comme des facteurs de dispersion. Des contrôles supplémentaires sont alors souvent nécessaires afin de vérifier les caractéristiques géométriques de perçages réalisés.

Les dispositifs de perçage ou de fraisurage haute-précision comportent classiquement un socle dans lequel la pièce à usiner est fixée et un outil commandé numériquement. L'outil est destiné à réaliser un usinage de type alésage ou fraisure sous l'impulsion d'un courant de commande. Cependant, la précision de l'usinage est impactée par la position de la pièce dans le socle, l'usure de l'outil ou encore les vibrations de la pièce lors de l'usinage. Ainsi, lorsque l'usinage est réalisé, la pièce doit être contrôlée, par exemple par des mesures à rayons X, pour déterminer si les tolérances sont respectées. Cette mesure ultérieure de la pièce impacte lourdement le temps de fabrication d'une pièce de haute-précision.

Il existe également des solutions sans contrôle ultérieur : elles reposent principalement sur l'utilisation de butées autorisant un réglage fin, et qui permettent l'arrêt du mouvement axial de l'ensemble d'usinage par rapport à la pièce à usiner afin de garantir une profondeur de perçage/fraisure. Le réglage de ces butées peut s'avérer fastidieux, et lorsqu'un système à contact est utilisé, des dispersions liées à des phénomènes mécaniques (jeux, usure,...) peuvent causer des imprécisions. En outre, des déchets liés aux opérations d'usinage (copeaux métalliques, poussières composites) accumulés entre l'élément de butée et la pièce à usiner peuvent fausser la perception de la position de la pièce et conduire à des dérives des caractéristiques géométriques des usinages réalisés.

On connait le document EP0321108 qui décrit un dispositif de calcul de trajectoire qui corrige la trajectoire de l'outil de travail en fonction de signaux acoustiques générés par le contact de l'outil sur la pièce à usiner.

### Exposé de l'invention

La présente invention entend résoudre ce problème en proposant une solution sans contrôle ultérieur dans laquelle les caractéristiques géométriques de la pièce sont mesurées au cours de l'usinage.

A cet effet, l'invention concerne un dispositif de contrôle du perçage ou du fraisurage d'une pièce dont la tolérance est inférieure à 50 µm selon la revendication 1.

L'invention permet ainsi de connaitre l'état des caractéristiques géométriques du perçage ou du fraisurage à chaque instant durant l'usinage. L'invention permet ainsi de réaliser un asservissement de l'outil en fonction des caractéristiques mesurées, améliorant ainsi la précision de l'usinage en réduisant la sensibilité aux dispersions d'origines extérieures (vibration, positionnement de la pièce ou usure de l'outil).

Selon un mode de réalisation, ledit moyen de mesure est un capteur de type accéléromètre disposé sur une surface de ladite pièce, ledit capteur étant apte à détecter les vibrations générées lors de l'usinage de la pièce.

Selon un mode de réalisation, ledit moyen de mesure est un capteur d'émission acoustique disposé sur une surface de ladite pièce, ledit capteur étant apte à détecter les micro-ruptures se propageant depuis l'usinage jusqu'à la surface de ladite pièce.

Selon un mode de réalisation, le moyen de mesure en temps réel des déplacements de l'outil est un capteur laser, ledit capteur étant apte à mesurer la position de l'outil au cours du temps.

Selon un mode de réalisation, le moyen de mesure en temps réel des déplacements de l'outil est un capteur inductif, ledit capteur étant apte à mesurer la position de l'outil au cours du temps.

Selon un mode de réalisation, le moyen de mesure en temps réel des variations du courant d'alimentation de l'outil est un capteur à effet hall.

### Brève description des dessins

On comprendra mieux l'invention à l'aide de la description, faite ci-après à titre purement explicatif, des modes de réalisation de l'invention, en référence aux Figures dans lesquelles :
- la Figure 1 illustre une représentation schématique d'un dispositif de contrôle du fraisurage d'une pièce selon un mode de réalisation de l'invention ;
- la Figure 2 illustre les variations de la position de la pièce, de la position de l'outil et du courant d'alimentation de l'outil au cours du temps pour l'usinage d'une pièce selon le dispositif de la Figure 1 ;
- la Figure 3 illustre une vue en coupe d'une pièce fraisurée assemblée avec une pièce percée, les deux pièces étant réalisées selon le dispositif de la Figure 1.

### Description détaillée des modes de réalisation de l'invention

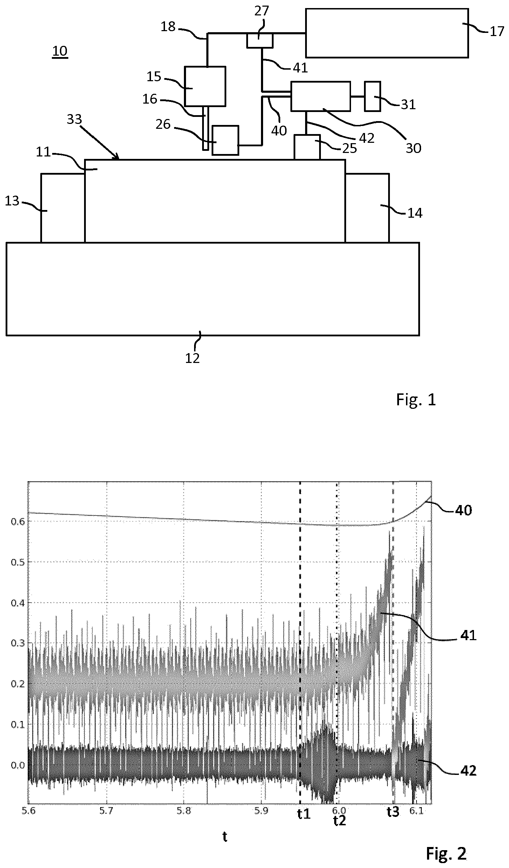

La Figure 1 illustre un dispositif 10 de contrôle et de commande du fraisurage d'une pièce 11 montée dans un socle 12 et enserrée entre deux montants 13, 14. Le dispositif 10 comporte un outil 15 muni d'une fraise 16 contrôlée par une commande numérique 18 au moyen d'une unité 17 de contrôle et de commande. L'unité 17 de contrôle et de commande permet de commander les déplacements et la rotation de la fraise 16 afin de réaliser une fraisure 20 depuis une face 33 de la pièce 11.

Le dispositif 10 comporte également un moyen de mesure 25 en temps réel des contraintes subies par la pièce 11 lors de l'usinage par l'outil 15, un moyen de mesure 26 en temps réel des déplacements de l'outil 15 et un moyen de mesure 27 en temps réel du courant 41 d'alimentation de l'outil 15. Ces trois mesures sont collectées par un multiplexeur 30 puis transmises en temps réel à un moyen d'analyse apte à interpréter ces mesures pour calculer la tolérance de l'usinage réalisé. Le moyen d'analyse peut, par exemple, être un ordinateur portable et la liaison sans fil peut être de tous les types connus.

Ces différentes mesures sont effectuées au cours de l'usinage afin de remédier à la nécessité de réaliser un contrôle qualité après l'usinage pour contrôler la tolérance de la pièce 11. Les mesures sont effectuées en temps réel, c'est-à-dire qu'elles sont effectuées régulièrement au cours de l'usinage, par exemple tout les centièmes de seconde.

Le moyen de mesure 25 de la tolérance de la fraisure 20 est un capteur de type accéléromètre ou un capteur d'émission acoustique disposé sur une surface 33 de la pièce 11. En variante, d'autres types de capteurs peuvent être utilisés. Ce capteur détecte, par exemple, les vibrations 42 de la pièce 11 ou les micro-ruptures se propageant depuis l'usinage jusqu'à la surface 33 de la pièce 11.

Dans un mode de réalisation, le moyen de mesure 26 du courant 41 d'alimentation de l'outil 15 est un capteur à effet Hall disposé sur le signal de commande numérique 18. En variante, d'autres types de capteurs peuvent être utilisés. Ce capteur mesure les variations du courant 41 d'alimentation de l'outil 15.

Le moyen de mesure 27 des déplacements de l'outil 15 est un capteur de type laser ou inductif disposé sur la course de la fraise 16. En variante, d'autres types de capteurs peuvent être utilisés par exemple des capteurs de type potentiométriques ou inductifs (également appelé LVDT pour « Linear Variable Differential Transformer » dans la littérature anglo-saxonne). Ce capteur mesure les déplacements 40 de la fraise 16.

La Figure 2 révèle une mesure des déplacements 40 de l'outil 15, du courant 41 d'alimentation de l'outil 15 et des vibrations 42 de la pièce 11 au cours d'un usinage de la pièce 11 par le dispositif de la Figure 1. Cette mesure permet d'obtenir la profondeur de l'usinage. Pour ce faire, un logiciel d'analyse des données 40-42 recherche l'instant t3 pour lequel le signe du courant 41 d'alimentation de l'outil 15 est inversé. Cet instant t3 permet de déterminer l'instant t2 de fin de l'usinage pour lequel l'outil 15 arrête de descendre dans la pièce 11 et remonte à sa position originelle. Le logiciel applique une constante de temps prédéfinie pour remonter à l'instant t2 pour lequel la fraise 16 n'usine plus la pièce 11. Cette constante de temps est définie dans une phase de calibration du dispositif 10. Le logiciel recherche ensuite l'instant t1 pour lequel la pièce 11 commence à subir des vibrations dues à l'impact de l'outil 15 sur la pièce 11. Le logiciel peut ainsi estimer la profondeur de l'usinage en calculant la différence de position de l'outil 15 entre les instants t1 et t2 en utilisant la mesure des déplacements 40 de l'outil 15.

Le dispositif de l'invention permet ainsi d'usiner une pièce avec des tolérances très faibles, inférieures à 50 µm. Le nombre et le type de capteur peuvent être modifié en fonction des besoins de contrôle.

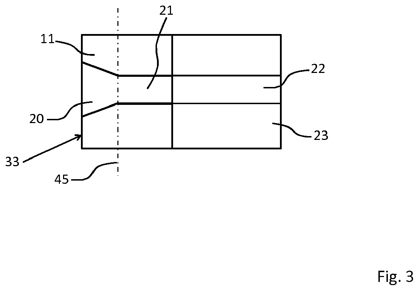

La Figure 3 illustre une vue en coupe de deux pièces 11, 23 de haute précision usinées par le dispositif 10 de la Figure 1. La première pièce 11 comporte une fraisure 20 réalisée depuis une face 33 et se prolongeant à partir de la ligne 45 par un alésage 21 coaxial avec la fraisure 20 et débouchant sur une face opposée à la face 33. La deuxième pièce 23 comporte un alésage 22 traversant. L'assemblage de ces deux pièces 11, 23 est réalisé par un rivet pénétrant dans une fraisure 20, dans l'alésage 21 de la première pièce 11 puis dans l'alésage 22 de la deuxième pièce 23. La fraisure 23 permet de contenir la tête du rivet. Pour le maintien d'un empennage arrière d'aéronef, la tête du rivet doit être précisément contenue dans la fraisure 20 au risque de déséquilibrer l'aéronef.

L'invention permet ainsi de réaliser des pièces de haute précision sans utiliser une étape de contrôle ultérieure.

## Revendications

1. Dispositif (10) de contrôle du perçage ou du fraisurage d'une pièce (11) dont la tolérance est inférieure à 50 µm, ledit dispositif (10) comportant :
- un socle (12) de maintien de ladite pièce (11) et
- un outil (15) commandé numériquement apte à réaliser un usinage de type alésage ou fraisure (20),
- au moins un moyen de mesure (25) en temps réel des contraintes subies par ladite pièce (11) lors de l'usinage par l'outil (15),
ledit dispositif étant **caractérisé en ce qu'**il comporte :
- au moins un moyen de mesure (26) en temps réel des déplacements de l'outil (15),
- au moins un moyen de mesure (27) en temps réel des variations du courant (41) d'alimentation de l'outil (15), et
- un moyen d'analyse apte à calculer la tolérance de l'alésage ou de la fraisure (20) à l'aide des mesures des contraintes subies par ladite pièce (11) lors de l'usinage, des mesures des déplacements de l'outil (15) et des mesures des variations du courant d'alimentation de l'outil (15),
ledit moyen d'analyse étant apte à réaliser un contrôle de qualité de l'usinage de ladite pièce (11).

2. Dispositif selon la revendication 1, **caractérisé en ce que** ledit moyen de mesure (25) est un capteur de type accéléromètre disposé sur une surface (33) de ladite pièce (11), ledit capteur étant apte à détecter les vibrations générées lors de l'usinage de la pièce (11).

3. Dispositif selon la revendication 1 ou 2, **caractérisé en ce que** ledit moyen de mesure (25) est un capteur d'émission acoustique disposé sur une surface (33) de ladite pièce (11), ledit capteur étant apte à détecter les micro-ruptures se propageant depuis l'usinage jusqu'à la surface de ladite pièce.

4. Dispositif selon la revendication 1, **caractérisé en ce que** le moyen de mesure (26) en temps réel des déplacements de l'outil (15) est un capteur laser, ledit capteur étant apte à mesurer la position (40) de l'outil (15) au cours du temps (t).

5. Dispositif selon la revendication 1, **caractérisé en ce que** le moyen de mesure (26) en temps réel des déplacements de l'outil (15) est un capteur inductif, ledit capteur étant apte à mesurer la position (40) de l'outil (15) au cours du temps (t).

6. Dispositif selon la revendication 1, **caractérisé en ce que** le moyen de mesure (27) en temps réel des variations du courant (41) d'alimentation de l'outil (15) est un capteur à effet hall.

## Patentansprüche

1. Vorrichtung (10) zur Kontrolle des Bohrens oder Ansenkens eines Bauteils (11), dessen Toleranz unter 50 µm liegt, wobei die Vorrichtung (10) Folgendes aufweist:
- einen Sockel (12) für den Halt des Bauteils (11) und
- ein digital gesteuertes Werkzeug (15), das eine Bearbeitung von der Art Bohren oder Ansenken (20) durchführen kann,
- mindestens eine Echtzeit-Messeinrichtung (25) der vom Bauteil (11) bei der Bearbeitung durch das Werkzeug (15) erfahrenen Beanspruchungen,
wobei die Vorrichtung **dadurch gekennzeichnet ist, dass** sie Folgendes aufweist:
- mindestens eine Echtzeit-Messeinrichtung (26) der Verschiebungen des Werkzeugs (15),
- mindestens eine Echtzeit-Messeinrichtung (27) der Schwankungen des Speisestroms (41) des Werkzeugs (15), und
- eine Analyseeinrichtung, die die Toleranz der Bohrung oder der Ansenkung (20) mit Hilfe der Messwerte der vom Bauteil (11) bei der Bearbeitung erfahrenen Beanspruchungen, der Messwerte der Verschiebungen des Werkzeugs (15) und der Messwerte der Schwankungen des Speisestroms des Werkzeugs (15) berechnen kann,
wobei die Analyseeinrichtung eine Qualitätskontrolle der Bearbeitung des Bauteils (11) durchführen kann.

2. Vorrichtung nach Anspruch 1, **dadurch gekennzeichnet, dass** die Messeinrichtung (25) ein Sensor von der Art Beschleunigungsmesser ist, der auf einer Fläche (33) des Bauteils (11) angeordnet ist, wobei der Sensor die Vibrationen erfassen kann, die bei der Bearbeitung des Bauteils (11) erzeugt werden.

3. Vorrichtung nach Anspruch 1 oder 2, **dadurch gekennzeichnet, dass** die Messeinrichtung (25) ein Schallemissionssensor ist, der auf einer Fläche (33) des Bauteils (11) angeordnet ist, wobei der Sensor die Mikrorisse erfassen kann, die sich von der Bearbeitung bis zur Fläche des Bauteils ausbreiten.

4. Vorrichtung nach Anspruch 1, **dadurch gekennzeichnet, dass** die Echtzeit-Messeinrichtung (26) der Verschiebungen des Werkzeugs (15) ein Lasersensor ist, wobei der Sensor die Stellung (40) des Werkzeugs (15) im Lauf der Zeit (t) messen kann.

5. Vorrichtung nach Anspruch 1, **dadurch gekennzeichnet, dass** die Echtzeit-Messeinrichtung (26) der Verschiebungen des Werkzeugs (15) ein induktiver Sensor ist, wobei der Sensor die Stellung (40) des Werkzeugs (15) im Lauf der Zeit (t) messen kann.

6. Vorrichtung nach Anspruch 1, **dadurch gekennzeichnet, dass** die Echtzeit-Messeinrichtung (27) der Schwankungen des Speisestroms (41) des Werkzeugs (15) ein Hall-Sensor ist.

## Claims

1. Device (10) for controlling drilling or countersinking of a workpiece (11) having a tolerance of less than 50 µm, said device (10) comprising:
- a base (12) for holding said workpiece (11) and
- a numerically controlled tool (15) that is able to produce machining of the bore or countersink (20) type,
- at least one means (25) for real-time measurement of the stresses experienced by said workpiece (11) during machining by the tool (15),
said device being **characterized in that** it comprises:
- at least one means (26) for real-time measurement of the movements of the tool (15),
- at least one means (27) for real-time measurement of the variations in the current (41) supplied to the tool (15), and
- an analysis means that is able to calculate the tolerance of the bore or of the countersink (20) using the measurements of the stresses experienced by said workpiece (11) during machining, the measurements of the movements of the tool (15) and the measurements of the variations of the current supplied to the tool (15),
said analysis means being able to carry out quality control of the machining of said workpiece (11).

2. Device according to Claim 1, **characterized in that** said measurement means (25) is a sensor of the accelerometers type arranged on a surface (33) of said workpiece (11), said sensor being able to detect the vibrations generated during machining of the workpiece (11).

3. Device according to Claim 1 or 2, **characterized in that** said measurement means (25) is an acoustic emissions sensor arranged on a surface (33) of said workpiece (11), said sensor being able to detect the micro-failures propagating from the machining to the surface of said workpiece.

4. Device according to Claim 1, **characterized in that** the means (26) for real-time measurement of the movements of the tool (15) is a laser sensor, said sensor being able to measure the position (40) of the tool (15) over time (t).

5. Device according to Claim 1, **characterized in that** the means (26) for real-time measurement of the movements of the tool (15) is an inductive sensor, said sensor being able to measure the position (40) of the tool (15) over time (t).

6. Device according to Claim 1, **characterized in that** the means (27) for real-time measurement of the variations of the current (41) supplied to the tool (15) is a Hall effect sensor.
